# EUROPÄISCHE PATENTSCHRIFT

(11) **EP 3 986 631 B1**
(45) Veröffentlichungstag und Bekanntmachung des Hinweises auf die Patenterteilung: **03.05.2023**
(21) Anmeldenummer: 20725127.3
(22) Anmeldetag: 06.05.2020
(51) Int. Cl.: B21J 5/02, B21J 5/12, B21J 13/02, B21K 1/16, B21K 21/12, F16L 31/00

(54) **VERFAHREN UND VORRICHTUNG ZUR HERSTELLUNG EINES SCHLAUCHNIPPELS**
METHOD AND DEVICE FOR PRODUCING A HOSE NIPPLE
PROCÉDÉ ET DISPOSITIF DE FABRICATION D'UN RACCORD DE TUYAU

(30) Priorität: 18.06.2019 DE 102019208854
(43) Veröffentlichungstag der Anmeldung: 27.04.2022
(73) Patentinhaber: ContiTech Techno-Chemie GmbH, 61184 Karben (DE)
(72) Erfinder: KEMPF, Dominik, 30419 Hannover (DE); JUNG, Harald, 30419 Hannover (DE); KOSITZA, Eugen, 30419 Hannover (DE)
(74) Vertreter: Continental Corporation
(86) Internationale Anmeldenummer: PCT/EP2020/062500
(87) Internationale Veröffentlichungsnummer: WO 2020/254033

(56) Entgegenhaltungen:
- EP-A2- 0 441 174
- WO-A1-2011/029687
- JP-A- H01 118 333
- KR-A- 20010 077 486
- KR-A- 20010 086 610
- US-A- 1 980 264

## Beschreibung

Die Erfindung betrifft ein Herstellverfahren für profilierte Schlauchnippel.

Schlauchnippel dienen in der Fluidtechnik meistens zum Aufstecken einer flexiblen Fluidleitung, beispielsweise eines Gummischlauchs. Da die Fluidleitung auf dem Schlauchnippel fixiert werden muss, weisen derartige Schlauchnippel ein Außenprofil auf, sodass beispielsweise bei einer Verpressung der Fluidleitung auf dem Schlauchnippel sich das Außenprofil in das Material der Fluidleitung eindrücken lässt, so das eine dichte, gegen Abrutschen der Fluidleitung vom Schlauchnippel gesicherte Verbindung der Fluidleitung auf dem Schlauchnippel gewährleistet ist.

Die Herstellung der Schlauchnippel kann auf verschiedene Weise erfolgen. Beispielsweise ist die Erzeugung des Nippelprofils durch Drehen, Schleifen, Rollieren, Hämmern oder Einpressen möglich.

Die spanende Bearbeitung bringt den Nachteil mit sich, dass dabei Späne entstehen können, die sorgfältig entfernt werden oder die Teile entsorgt werden müssen. Das Rollieren und Hämmern ist, wie die spanende Bearbeitung auch, ein relativ zeitaufwändiges Verfahren, wobei die Maschinen aufwändig einzustellen sind. Das spanlose Erzeugen des Profils erfolgt beispielsweise durch Hämmern oder Rollieren. Dabei kommt es häufig zu Gratbildung, die beim Aufschieben einer Fluidleitung auf den Nippel die Fluidleitung beschädigen kann.

Die WO 1986 00 68 13 A1 zeigt ein Verfahren, bei dem ein Rohrleitungsende durch eine kaltumformende Durchmesserreduzierung in eine vorgesehene profilierte Form verformt wird. Neben der Gefahr, dass bei diesem Verfahren Grate entstehen, kommt hier noch nachteilig hinzu, dass dabei der Durchmesser der Rohrleitung im Bereich des Nippels reduziert wird. Dies führt zu einem geringeren Durchfluss im Bereich des Nippels, so dass gegebenenfalls die gesamte Rohrleitung größer ausgelegt werden muss.

Die KR 20010086610 A offenbart ein gattungsgemäßes Verfahren, bei dem ein rohrförmiges Halbzeug durch eine Durchmessererweiterung in eine vorgesehene profilierte Form verformt wird. Hierbei entstehen jedoch regelmäßig und insbesondere an den Trennstellen der Form Grate an den Außenflächen der Profilstege, die beim Aufschieben eines Schlauches auf den Schlauchnippel zu Beschädigungen des Schlauches führen können.

Die WO 2011/029687 A1 offenbart eine Formvorrichtung zur Herstellung einer Rohrverschraubung mit einem konisch verlaufenden Wulst am Rohrende. Die Vorrichtung weist zwei Werkzeugteile auf, wobei eines der Werkzeugteile in zwei Segmente teilbar ist und das andere Werkzeugteil als vollständig geschlossener Ring ausgebildet ist.

Der Erfindung lag die Aufgabe zugrunde, ein Verfahren zu schaffen, mithilfe dessen Schlauchnippel der eingangs geschilderten Art unter Vermeidung der genannten Nachteile und ohne Durchmesserverringerung einfach herstellbar sind.

Diese Aufgabe wird dadurch gelöst, dass das Verfahren folgende Arbeitsschritte aufweist, nämlich
- Bereitstellung eines teilbaren Umformwerkzeugs mit mindestens zwei Werkzeugteilen, wobei die Werkzeugteile jeweils mindestens eine Aussparung aufweisen, die bei zusammengesetzten Werkzeugteilen einen länglichen Hohlraum bilden, wobei die Aussparungen jeweils profiliert sind, so dass bei zusammengesetzten Werkzeugteilen der längliche Hohlraum ein Profil vorbestimmter Geometrie mit radial nach innen ragenden ringförmigen Stegen und radial nach außen weisenden ringförmigen Nuten aufweist,
- Einlegen eines Rohrabschnitts in den länglichen Hohlraum,
- Einpressen oder Einziehen eines Umformstempels in den Rohrabschnitt, wobei der Umformstempel derart ausgebildet ist, dass beim Einpressen oder Einziehen in den Rohrabschnitt der Rohrabschnitt in seinem Durchmesser vergrößert und das Material des Rohrabschnitts nach radial außen in das Profil des länglichen Hohlraums verdrängt wird, dass im Bereich der Werkzeugteilungen zwischen dem in die radial nach außen weisenden ringförmigen Nuten des Profils verdrängten Material des Rohrabschnitts und der Werkzeugwand ein Abstand verbleibt,
- Öffnen des Werkzeugs,
- Entnehmen des zu einem Schlauchnippel umgeformten Rohrabschnitts.

Dadurch, dass bei dem erfindungsgemäßen Verfahren der Durchmesser des Rohrabschnitts vergrößert wird, tritt im Bereich des Schlauch Nippels keine unerwünschte Drosselung eines Volumenstroms auf.

Durch eine entsprechende Abstimmung von Durchmesser, Wandstärke des Rohrabschnitts, dem Durchmesser des Umformstempels und der Tiefe der nach radial außen weisenden ringförmigen Nuten des Werkzeugprofils ist es möglich, den Werkstofffluss so einzustellen, dass das in die genannten Nuten fließende Material des Rohrabschnitts nicht bis an die Wand des Werkzeugs gepresst wird. Daher finden sich am fertigen Schlauchnippel durch die Werkzeugteilung entstehende Grate nur in den Bereichen, in denen der Werkstoff des Rohrabschnitts mit dem Werkzeug in Berührung kommt, also im vorliegenden Fall in den Profiltälern des Schlauchnippels. Auf diese Weise ist die Gefahr, beim Aufschieben eines Schlauches auf den Schlauchnippel eine Beschädigung des Schlauches zu erzeugen, deutlich verringert.

Der Erfindung lag weiterhin die Aufgabe zugrunde, eine Vorrichtung zu schaffen, die unter Vermeidung der genannten Nachteile eine einfache, schnelle und preiswerte Erzeugung von Schlauchnippeln mit Außenprofil ermöglicht, ohne dabei insbesondere den Innendurchmesser zu reduzieren.

Diese Aufgabe wird dadurch gelöst, dass die Vorrichtung mindestens folgende Bauteile aufweist, nämlich
- Mindestens ein mindestens zweiteiliges Formwerkzeug und mindestens einen Umformstempel, wobei
- die Formwerkzeugteile jeweils mindestens eine Aussparung aufweisen und bei zusammengeführten Formwerkzeugteilen durch die Aussparungen mindestens ein länglicher Hohlraum ausbildbar ist, der geeignet ist, jeweils ein Ende eines

Rohrabschnittes mit vorbestimmter Geometrie aufzunehmen, wobei
- der längliche Hohlraum ein Profil aufweist, welches nach radial innen ragende ringförmige Stege und nach radial außen weisende ringförmigen Nuten aufweist, wobei
- die nach radial außen weisenden ringförmigen Nuten an ihrem der Außenrichtung zugeordneten Endzone mindestens im Bereich der Werkzeugteilung und Zusatzhohlräume aufweisen und
- wobei der mindestens eine Umformstempel derart ausgebildet ist, dass er in den Rohrabschnitt einpressbar oder einziehbar ist, wobei der Durchmesser des Umformstempels mit der vorbestimmten Geometrie des Rohrabschnitts derart korrespondiert, dass
- der Rohrabschnitt während des Einpressens oder Einziehens des Umformstempels gegenüber seinem Ausgangsdurchmesser zu einem größeren Durchmesser verformbar ist, wodurch Material der Wand des Rohrabschnitts nach außen pressbar ist, wobei das nach außen gepresste Material in das Profil des länglichen Hohlraums eingreift und in eine zu dem Profil korrespondierende Form des Rohrabschnitts ausbildbar ist derart, dass das Material mit den nach innen ragenden ringförmigen Stegen in Kontakt kommt, das in die nach außen weisenden ringförmigen Nuten verpresste Material in die Ringnuten eindringt derart, dass zwischen dem Material des Rohrabschnitts und dem Werkzeug durch die Zusatzhohlräume ein Abstand verbleibt.

Eine derartige Vorrichtung hat den Vorteil, dass bei der Umformung keine Durchmesserverringerung entsteht. Die Umformung mit der erfindungsgemäßen Vorrichtung erfolgt als Kaltmassivumformung, was eine gute Festigkeit der erzeugten Teile mit sich bringt. Entscheidend bei einer derartigen Umformung ist, dass trotz der Verwendung eines geteilten Werkzeuges und eines dabei zwangsläufig entstehenden Formgrates am fertigen Teil dieser Formgrat unkritisch ist, da das Profil des Werkzeugs mit der vorbestimmten Geometrie und dem Umformstempel derart abgestimmt ist, dass ein Grat nur in den Profiltälern des Fertigteils vorhanden ist. Die zur Abdichtung notwendigen Außenflächen der Profilstege weisen dagegen keinen Formgrat auf. Dadurch, dass bei der Umformung das Material des Rohrabschnitts zwar in die nach außen weisenden Werkzeugnuten einpressbar ist, der an diesem guten angeordnete Zusatz Hohlraum jedoch für einen Abstand zwischen dem Werkzeug und dem verpressten Material in diesem Bereich sorgt, sind am Fertigteil an den Ringprofilstegen keine Grate vorhanden, da das umgeformten Material des Rohrabschnitts mit den Trennfugen im Werkzeug in diesem Bereich nicht in Kontakt kommt.

In einer Weiterbildung der Erfindung weist die Vorrichtung weiter ein Ringformwerkzeugteil auf, welches als ungeteilter Ring ausgebildet ist, wobei der Ring mit seiner Öffnung axial fluchtend auf den in den länglichen Hohlraum des geteilten Formwerkzeugs eingelegten Rohrabschnitt aufpressbar ist.

Ein derartiges Ringformwerkzeugteil hat den Vorteil, dass damit dem Rohrabschnitt beispielsweise eine Einfädelhilfe anformbar ist. Dadurch, dass die Öffnung als ungeteilter Ring ausgebildet ist, tritt hier das Problem der Gratbildung nicht auf.

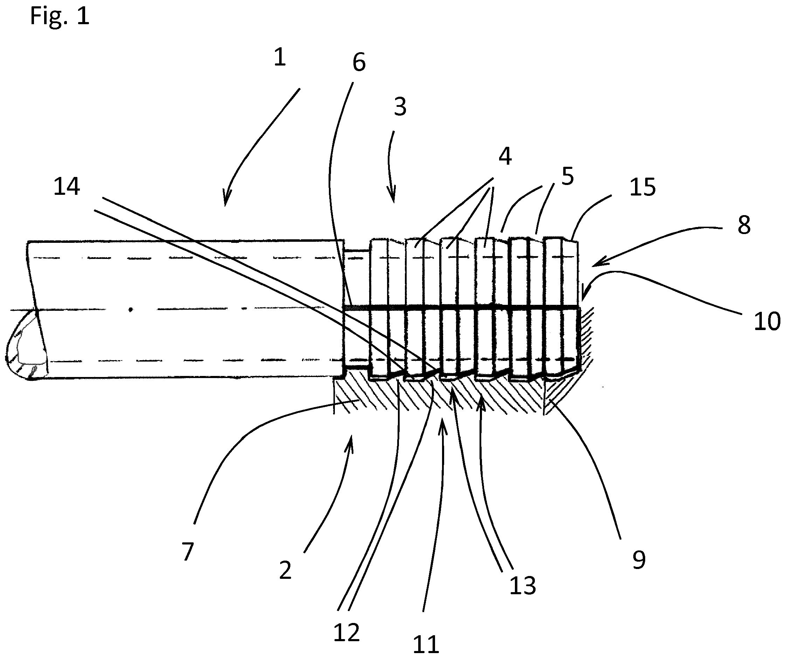

Anhand der Zeichnung wird nachstehend ein Ausführungsbeispiel der Erfindung näher erläutert. Die Figur 1 zeigt im oberen Teil einen fertig ausgebildeten Schlauchnippel 1, der im unteren Teil der Figur in einer erfindungsgemäßen Vorrichtung 2 angeordnet ist. Eine Umformung des Schlauchnippels 1 ist in dieser Darstellung bereits abgeschlossen, so dass ein Umformstempel hier nicht gezeigt ist.

Der Schlauchnippel 1 weist ein Profil 3 auf, welches ringförmige Stege 4 und Profiltäler 5 aufweist. In der Darstellung bezeichnet die Linie 6 eine Teilungsebene bzw. eine Trennfuge der Vorrichtung 2, wobei im unteren Teil der Figur die Teilungsebene um 90° gedreht als Teil-Längsschnitt der Vorrichtung 2 dargestellt ist.

Im Bereich der Trennfuge 6 weisen die Profiltäler 5 hier nicht dargestellte Grate auf. Die Stege 4 weisen im Bereich der Trennfuge 6 dagegen keine Grate auf.

Die im unteren Teil der Figur 1 gezeigte Vorrichtung 2 weist 2 Werkzeughälften auf, von denen hier nur eine Werkzeughälfte 7 als Teilschnitt gezeigt ist. Im Endbereich 8 der Vorrichtung 2 ist ein weiteres Werkzeugteil 9 angeordnet, welches eine ringförmig geschlossene, in Richtung auf den eingelegten Schlauchnippel 1 sich konisch öffnende Öffnung 10 aufweist.

Die Werkzeughälften 7 weisen ein im Schnitt quasi zahnförmiges Profil 11 auf. Nach innen ragende Zähne 12 wechseln sich in axialer Richtung mit radial nach außen weisenden Nuten 13 ab. Am jeweils radial außenliegenden Ende der Nuten 13 ist jeweils ein Hohlraum 14 angeordnet, der nur im Bereich der Trennfuge der Werkzeughälften vorhanden ist.

Bei der in dieser Darstellung bereits vollzogenen Umformung des Schlauchnippels 1 ist eine Vergrößerung des ursprünglichen Durchmessers des rohrförmigen Schlauchnippels 1 entstanden, wobei die radiale Ausdehnung des Schlauchnippels 1 durch die Werkzeughälften 7 und das weitere Werkzeugteil 9 begrenzt ist. Dabei ist die Durchmesservergrößerung vorab so bestimmt, dass das Material des Schlauchnippels 1 zwar in das Profil 11 der Vorrichtung 2 verpressbar ist, jedoch im Bereich der Hohlräume 14 ein Abstand zwischen dem Schlauchnippel 1 und der Vorrichtung 2 verbleibt. Das bedeutet, dass in diesem Bereich der Trennfuge die ringförmigen Stege 4 mit dem Werkzeug an ihrem axialen Ende nicht in Berührung kommen und so auch kein Grat in diesem Bereich entstehen kann. Damit bleiben die entscheidenden lasttragenden Stege 4 frei von Graten, so dass ein aufschiebbarer, hier nicht gezeigter Schlauch ohne Beschädigungen auf den Schlauchnippel 1 aufschiebbar ist.

Verbessert wird dies noch durch die Anformung einer gratfreien Anlaufschräge 15 mittels des Werkzeugteils 9.

### Bezugszeichenliste

### (Teil der Beschreibung)

- 1: Schlauchnippel
- 2: Vorrichtung
- 3: Profil des Schlauchnippels 1
- 4: ringförmige Stege des Profils 3
- 5: Profiltälern des Profils 3
- 6: Trennfuge
- 7: Werkzeughälfte der Vorrichtung 2
- 8: Endbereich der Vorrichtung 2
- 9: weiteres Werkzeugteil
- 10: konisch Öffnung des Werkzeugteils 9
- 11: Zahn förmiges Profil der Werkzeughälfte 7
- 12: Zähne des Profils 11
- 13: Nuten des Profils 11
- 14: Hohlräume am axial äußeren Ende der Nuten 13
- 15: Anlaufschräge

## Patentansprüche

1. Herstellverfahren für profilierte Schlauchnippel (1), wobei das Verfahren folgende Arbeitsschritte aufweist, nämlich
- Bereitstellung eines teilbaren Umformwerkzeugs (2) mit mindestens zwei Werkzeugteilen (7), wobei die Werkzeugteile (7) jeweils mindestens eine Aussparung aufweisen, die bei zusammengesetzten Werkzeugteilen (7) einen länglichen Hohlraum bilden, wobei die Aussparungen jeweils profiliert sind, so dass bei zusammengesetzten Werkzeugteilen der längliche Hohlraum ein Profil (11) vorbestimmter Geometrie mit radial nach innen ragenden ringförmigen Stegen (12) und radial nach außen weisenden ringförmigen Nuten (13) aufweist,
- Einlegen eines Rohrabschnitts in den länglichen Hohlraum,
- Einpressen oder Einziehen eines Umformstempels in den Rohrabschnitt, wobei der Umformstempel derart ausgebildet ist, dass beim Einpressen oder Einziehen in den Rohrabschnitt der Rohrabschnitt in seinem Durchmesser vergrößert und das Material des Rohrabschnitts nach radial außen in das Profil des länglichen Hohlraums verdrängt wird,
- Öffnen des Werkzeugs,
- Entnehmen des zu einem Schlauchnippel (1) umgeformten Rohrabschnitts,
**dadurch gekennzeichnet, dass**
beim Einpressen oder Einziehen des Umformstempels das Material des Rohrabschnitts derart verdrängt wird, dass im Bereich der Werkzeugteilungen (6) zwischen dem in die radial nach außen weisenden ringförmigen Nuten (13) des Profils verdrängten Material des Rohrabschnitts und der Werkzeugwand ein Abstand verbleibt.

2. Vorrichtung zur Herstellung eines Schlauchnippels (1), wobei die Vorrichtung mindestens folgende Bauteile aufweist, nämlich
- mindestens ein mindestens zweiteiliges Formwerkzeug (2, 7) und mindestens einen Umformstempel, wobei
- die Formwerkzeugteile (7) jeweils mindestens eine Aussparung aufweisen und bei zusammengeführten Formwerkzeugteilen (7) durch die Aussparungen mindestens ein länglicher Hohlraum ausbildbar ist, der geeignet ist, jeweils ein Ende eines Rohrabschnittes (1) mit vorbestimmter Geometrie aufzunehmen, wobei
- der längliche Hohlraum ein Profil (11) aufweist, welches nach radial innen ragende ringförmige Stege (12) und nach radial außen weisende ringförmigen Nuten (13, 14) aufweist,
- wobei der mindestens eine Umformstempel derart ausgebildet ist, dass er in den Rohrabschnitt (1) einpressbar oder einziehbar ist, wobei der Durchmesser des Umformstempels mit der vorbestimmten Geometrie des Rohrabschnitts (1) derart korrespondiert, dass
- der Rohrabschnitt (1) während des Einpressens oder Einziehens des Umformstempels gegenüber seinem Ausgangsdurchmesser zu einem größeren Durchmesser verformbar ist, wodurch Material der Wand des Rohrabschnitts (1) nach außen pressbar ist, wobei das nach außen gepresste Material in das Profil (11) des länglichen Hohlraums eingreift und in eine zu dem Profil (11) korrespondierende Form (3) des Rohrabschnitts (1) ausbildbar ist derart, dass das Material mit den nach innen ragenden ringförmigen Stegen (12) in Kontakt kommt und das in die nach außen weisenden ringförmigen Nuten (13) verpresste Material in die Ringnuten (13) eindringt
**dadurch gekennzeichnet, dass**
die nach radial außen weisenden ringförmigen Nuten (13) an ihrem der Außenrichtung zugeordneten Endzone mindestens im Bereich der Werkzeugteilung (6) Zusatzhohlräume (14) aufweisen, durch die zwischen dem verpressten Material des Rohrabschnitts (1) und dem Werkzeug (2, 7) ein Abstand verbleibt.

3. Vorrichtung nach Anspruch 2, **dadurch gekennzeichnet, dass** die Vorrichtung (2) weiter ein Ringformwerkzeugteil (9) aufweist, welches als ungeteilter Ring ausgebildet ist, wobei der Ring (9) mit seiner Öffnung (10) axial fluchtend auf den in den länglichen Hohlraum des geteilten Formwerkzeugs eingelegten Rohrabschnitt (1, 8) aufpressbar ist.

## Claims

1. Production method for profiled hose nipples (1), wherein the method comprises the following working steps, specifically:
- providing a divisible forming tool (2) having at least two tool parts (7), wherein the tool parts (7) each have at least one cutout, said cutouts forming an elongate cavity when the tool parts (7) are assembled, wherein the cutouts are each profiled in such a way that when the tool parts are assembled, the elongate cavity has a profile (11) of predetermined geometry with radially inwardly projecting ring-shaped webs (12) and radially outwardly pointing ring-shaped grooves (13),
- inserting a pipe portion into the elongate cavity,
- pressing or drawing a forming punch into the pipe portion, wherein the forming punch is designed in such a way that when it is being pressed or drawn into the pipe portion, the diameter of the pipe portion increases and the material of the pipe portion is radially outwardly displaced into the profile of the elongate cavity,
- opening the tool,
- removing the pipe portion which has been formed into a hose nipple (1),
**characterized in that**,
when the forming punch is being pressed or drawn in, the material of the pipe portion is displaced in such a way that, in the region of the tool partings (6), a distance remains between the pipe portion material that is displaced into the radially outwardly pointing ring-shaped grooves (13) of the profile and the tool wall.

2. Apparatus for producing a hose nipple (1), wherein the apparatus comprises at least the following components, specifically:
- at least one at least two-part forming tool (2, 7) and at least one forming punch, wherein
- the forming tool parts (7) each have at least one cutout, and when the forming tool parts (7) are assembled, the cutouts can form at least one elongate cavity which is suitable for accommodating a respective end of a pipe portion (1) with a predetermined geometry, wherein
- the elongate cavity has a profile (11) which has radially inwardly projecting ring-shaped webs (12) and radially outwardly pointing ring-shaped grooves (13, 14),
- wherein the at least one forming punch is designed in such a way that it can be pressed or drawn into the pipe portion (1), wherein the diameter of the forming punch corresponds to the predetermined geometry of the pipe portion (1) in such a way that
- when the forming punch is being pressed or drawn in, the pipe portion (1) can be deformed to have a diameter greater than its initial diameter, whereby material of the wall of the pipe portion (1) can be pressed outwards, wherein the material that is pressed outwards engages in the profile (11) of the elongate cavity and can be formed into a shape (3), which corresponds to the profile (11), of the pipe portion (1) in such a way that the material comes into contact with the inwardly projecting ring-shaped webs (12), and the material which is pressed into the outwardly pointing ring-shaped grooves (13) penetrates the ring-shaped grooves (13),
**characterized in that**
the radially outwardly pointing ring-shaped grooves (13) have, at their end zone assigned to the outward direction, additional cavities (14) at least in the region of the tool parting (6), a distance remaining between the pressed material of the pipe portion (1) and the tool (2, 7) as a result of said additional cavities.

3. Apparatus according to Claim 2, **characterized in that** the apparatus (2) also has a ring-shaped forming tool part (9) which is in the form of a non-split ring, wherein the opening (10) of the ring (9) can be pressed in an axially flush manner onto the pipe portion (1, 8) inserted into the elongate cavity of the split forming tool.

## Revendications

1. Procédé de fabrication de raccords de tuyaux profilés (1), le procédé présentant les étapes de travail suivantes, à savoir
- la fourniture d'un outil de formage divisible (2) avec au moins deux parties d'outil (7), les parties d'outil (7) présentant chacune au moins un évidement qui, lorsque les parties d'outil (7) sont assemblées, forment une cavité allongée, les évidements étant chacun profilés de telle sorte que, lorsque les parties d'outil sont assemblées, la cavité allongée présente un profil (11) de géométrie prédéterminée avec des nervures annulaires (12) faisant saillie radialement vers l'intérieur et des rainures annulaires (13) orientées radialement vers l'extérieur,
- l'insertion d'une section de tube dans la cavité allongée,
- l'enfoncement ou la rétraction d'un poinçon de formage dans la section de tube, le poinçon de formage étant configuré de telle sorte que, lors de l'enfoncement ou de la rétraction dans la section de tube, la section de tube est agrandie dans son diamètre et le matériau de la section de tube est déplacé radialement vers l'extérieur dans le profil de la cavité allongée,
- l'ouverture de l'outil,
- le retrait de la section de tube formée en un raccord de tuyau (1),
**caractérisé en ce que**
lors de l'enfoncement ou de la rétraction du poinçon de formage, le matériau de la section de tube est déplacé de telle sorte que, dans la zone des divisions d'outil (6), il reste un espace entre le matériau de la section de tube déplacé dans les rainures annulaires (13) du profil, orientées radialement vers l'extérieur, et la paroi d'outil.

2. Dispositif pour la fabrication d'un raccord de tuyau (1), le dispositif présentant au moins les composants suivants, à savoir
- au moins un outil de formage (2, 7) en au moins deux parties et au moins un poinçon de formage,
- les parties d'outil de formage (7) présentant chacune au moins un évidement et, lorsque les parties d'outil de formage (7) sont assemblées, au moins une cavité allongée pouvant être formée par les évidements, qui est apte à recevoir respectivement une extrémité d'une section de tube (1) de géométrie prédéterminée,
- la cavité allongée présentant un profil (11) qui présente des nervures annulaires (12) faisant saillie radialement vers l'intérieur et des rainures annulaires (13, 14) orientées radialement vers l'extérieur,
- l'au moins un poinçon de formage étant configuré de telle sorte qu'il peut être enfoncé ou rétracté dans la section de tube (1), le diamètre du poinçon de formage correspondant à la géométrie prédéterminée de la section de tube (1) de telle sorte que
- la section de tube (1) peut être déformée en un diamètre plus grand par rapport à son diamètre initial pendant l'enfoncement ou la rétraction du poinçon de formage, moyennant quoi le matériau de la paroi de la section de tube (1) peut être pressé vers l'extérieur, le matériau pressé vers l'extérieur s'engageant dans le profil (11) de la cavité allongée et pouvant être façonné en une forme (3) de la section de tube (1) correspondant au profil (11) de telle sorte que le matériau entre en contact avec les nervures annulaires (12) faisant saillie vers l'intérieur et le matériau pressé dans les rainures annulaires (13) orientées vers l'extérieur pénètre dans les rainures annulaires (13),
**caractérisé en ce que**
les rainures annulaires (13) orientées radialement vers l'extérieur présentent, dans leur zone d'extrémité associée à la direction extérieure, au moins dans la zone de la division d'outil (6), des cavités supplémentaires (14) qui laissent un espace entre le matériau pressé de la section de tube (1) et l'outil (2, 7).

3. Dispositif selon la revendication 2, **caractérisé en ce que** le dispositif (2) présente en outre une partie d'outil de formage annulaire (9) qui est configurée sous forme d'anneau non divisé, l'anneau (9) pouvant être pressé avec son ouverture (10) en alignement axial sur la section de tube (1, 8) insérée dans la cavité allongée de l'outil de formage divisé.
